# EUROPEAN PATENT SPECIFICATION

(11) **EP 3 316 604 B1**
(45) Date of publication and mention of the grant of the patent: **21.08.2019**
(21) Application number: 17199589.7
(22) Date of filing: 01.11.2017
(51) Int. Cl.: H04W 4/80, H04W 8/00, H04W 84/12

(54) **WIRELESS COMMUNICATION DEVICE, AND A CONTROL METHOD AND CONTROL PROGRAM THEREFOR**
DRAHTLOSKOMMUNIKATIONSVORRICHTUNG SOWIE STEUERUNGSVERFAHREN UND STEUERUNGSPROGRAMM DAFÜR
DISPOSITIF DE COMMUNICATION SANS FIL ET PROCÉDÉ DE COMMANDE ET SON PROGRAMME DE COMMANDE

(30) Priority: 01.11.2016 JP 2016214058
(43) Date of publication of application: 02.05.2018
(73) Proprietor: Seiko Epson Corporation, Tokyo 160-8801 (JP)
(72) Inventor: NISHIDA, Kota, Suwa-shi, Nagano 392-8502 (JP)
(74) Representative: Miller Sturt Kenyon

(56) References cited:
- US-A1- 2016 088 423
- US-A1- 2016 253 133

## Description

### BACKGROUND

### 1. Technical Field

The present invention relates to a wireless communication device that connects wirelessly to an external device, and a control method and control program for the wireless communication device.

### 2. Related Art

Wireless communication devices such as smartphones are now capable of exchanging data wirelessly when held in close proximity to a printer or other external device. The information process system described in JP-A-2009-135865 describes opening a wireless proximity communication connection using near-field communication (NFC) technology between a mobile terminal as a wireless communication device and a multifunction device as an external device, then changing the wireless connection to a high-speed wireless Bluetooth (R) connection whereby data for printing is then exchanged between the mobile terminal and the external device. Near-field communication is enabled by the user touching a specific contact position on the multifunction device with the mobile terminal, that is, by holding the NFC communicator of the mobile terminal near the NFC communicator of the multifunction device.

To reduce power consumption and improve security, smartphones and similar wireless communication devices are often used with the NFC communicator turned off (disabled).

If the NFC communicator of the wireless communication device is turned off, communication cannot be established with the external device even if the wireless communication device is appropriately close to the external device, and data communication is therefore not possible.

US 2016/253133 discloses an image recording apparatus that includes a first communication interface configured to perform communication according to a first communication standard, a second communication interface configured to perform communication according to a second communication standard that is different from the first communication standard and that is a wireless communication standard, an image recorder, and a controller. The controller receives image data and first identification information from an image-data output device via the first communication interface. The controller broadcasts the received first identification information via the second communication interface.

### SUMMARY

The present invention provides technology that improves user convenience.

To achieve the foregoing objective, one aspect of the invention is a wireless communication device as defined in claim 1.

Another aspect of the invention is a control method as defined in claim 10.

Another aspect of the invention is a non-transitory, computer-readable recording medium storing a control program as defined in claim 11.

The invention thus comprised provides technology that can improve user convenience.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram illustrating the functional configuration of a system including a wireless communication device.
FIG. 2 shows examples of screens presented by a dedicated application.
FIG. 3 is a flow chart shows an example of a printing control process run by the wireless communication device.
FIG. 4 shows an example of the beacon signal of a first wireless proximity communication from an external device.
FIG. 5 illustrates when settings change in a second wireless proximity communication and a third wireless communication.
FIG. 6 is a flow chart of another printing control process executed by the wireless communication device.
FIG. 7 is a flow chart of another printing control process executed by the wireless communication device.
FIG. 8 is a flow chart of another printing control process executed by the wireless communication device.
FIG. 9 is a flow chart of a process executed in a system including a wireless communication device.

### DESCRIPTION OF EMBODIMENTS

Preferred embodiments of the present invention are described below with reference to the accompanying figures. The invention is obviously not limited the embodiments described below, and all features of the following embodiment are not essential to the solution provided by the invention.

### (1) Technical concept

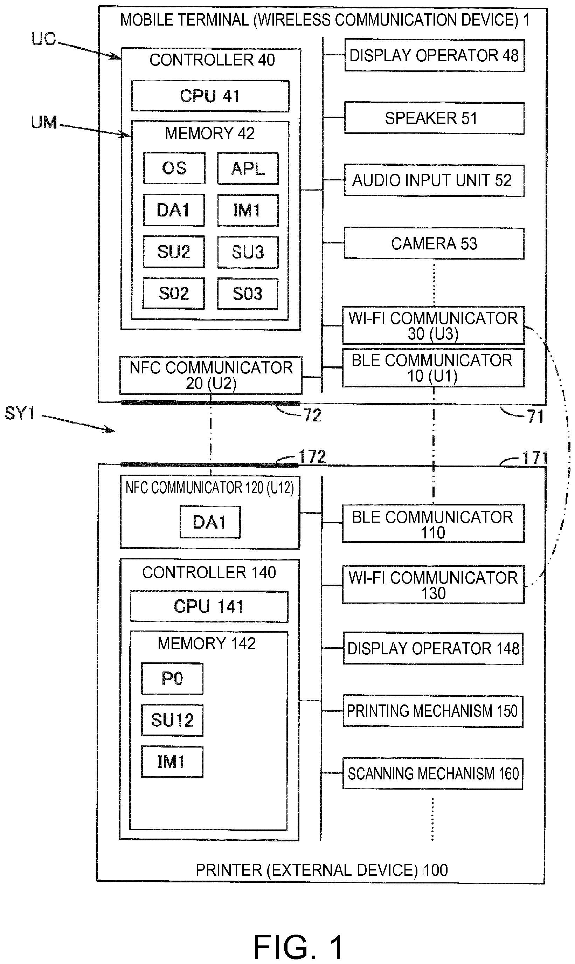

The technical concept of the invention is described first with reference to FIG. 1 to FIG. 9. Note that the figures referenced below schematically illustrate the invention, and are not coordinated for consistency with each other. Elements in this technology are also not limited to the specific examples indicated by reference numerals.

### Embodiment 1

A wireless communication device (such as a mobile terminal 1) according to this embodiment of the invention has a first wireless communicator U1, a second wireless communicator U2, and a controller UC, and connects wirelessly to an external device (such as a printer 100).

The first wireless communicator U1 communicates by a first proximity communication protocol, such as Bluetooth Low Energy (BLE) in this example.

The second wireless communicator U2 communicates by a second proximity communication protocol (such as NFC) having a shorter (more restricted) communication range than the first proximity communication method.

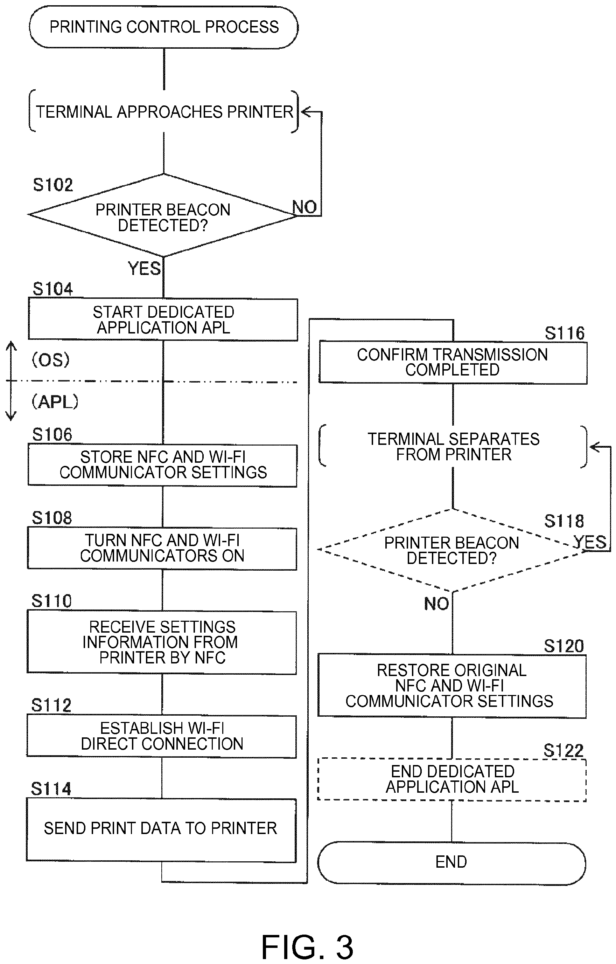

When proximity to the external device (100) by first proximity communication, the controller UC executes a process (such as step S108 in FIG. 3) that switches communication to the second proximity communication method.

This first embodiment avoids being unable to communicate by second proximity communication when the wireless communication device (1) and external device (100) are in proximity but second proximity communication is not enabled. This first embodiment can therefore provide a wireless communication device that can improve user convenience.

The external device may be, for example, a printer, display, or other image forming device, a scanner or other image reading device, a multifunction device combining an image forming device and image reading device, as well as various mobile devices.

The wireless communication device may be a smartphone or other cell phone, or a tablet computer, for example.

Proximity to the external device includes the wireless communication device moving to within a certain distance of the external device, the external device moving to within a certain distance of the wireless communication device, and the wireless communication device and external device both moving closer to each other.

Detection of proximity to the external device by first proximity communication includes detecting first proximity communication from the external device, and detecting the distance to the external device being within a certain range.

Executing a process enabling communication is not limited to changing a communication-disabled setting to a communication-enabled setting, and includes not changing the communication-enabled setting.

Enabling communication by second proximity communication when proximity to the external device is detected includes setting second proximity communication always enabled when proximity to the external device is detected, and setting second proximity communication enabled only when proximity to the external device is detected and a specific condition is met.

### Embodiment 2

As shown in FIG. 1, the wireless communication device (1) may also have a third wireless communicator U3 that communicates using a third wireless communication protocol (in this example, wireless communication by Wi-Fi Direct) having a greater communication range than the second proximity communication protocol (such as proximity communication by NFC).

When communication using the second proximity communication is enabled, the controller UC receives settings information DA1 for communicating by the third wireless communication protocol from the external device (100) by the second wireless communicator U2, enabling communication with the external device (100) by the third wireless communication protocol through the third wireless communicator U3 based on the settings information DA1. Because this enables communication by a third wireless communication method with the external device (100) set to communicate by the second proximity communication, this configuration provides technology further improving user convenience.

While not included in embodiment 2, the wireless communication device not having a third wireless communicator is included in this technology.

### Embodiment 3

The third wireless communicator U3 may communicate by the third wireless communication protocol when communication by the third wireless communication protocol (such as wireless communication by Wi-Fi Direct). When proximity to the external device (100) is detected by first proximity communication (such as proximity communication by BLE), the controller UC may execute a process enabling communication by the third wireless communication method. This configuration avoids not communicating by the third wireless communication method when communication by the third wireless communication method is not enabled and the wireless communication device (1) and external device (100) are in proximity. This configuration provides technology further improving user convenience.

Executing a process enabling communication is not limited to changing a communication-disabled setting to a communication-enabled setting, and includes not changing the communication-enabled setting.

While not included in embodiment 3, the third wireless communicator always being enabled is included in this technology.

### Embodiment 4

As shown in FIG. 1, for example, the wireless communication device (1) may also have memory UM storing an application program (APL) causing a computer to embody a function for executing a process enabling communication by the second proximity communication (such as proximity communication by NFC) and communicating wirelessly with the external device (100). When proximity to the external device (100) is detected by first proximity communication (such as proximity communication by BLE), the controller UC, by starting the application program, may execute a process enabling the second proximity communication, and communicate wirelessly with the external device (100). This configuration establishes a wireless communication link to the external device (100) by starting the application program and enabling second proximity communication when proximity the wireless communication device (1) and external device (100) are in proximity to each other. This configuration provides a wireless communication device that can further improve user convenience.

### Embodiment 5

As shown in FIG. 3, the controller UC, when proximity to the external device (100) is detected by the first proximity communication (such as proximity communication by BLE), may execute a process that stores the original setting S02 that was set for second proximity communication (such as proximity communication by NFC), and enables communication by the second proximity communication. Furthermore, when proximity to the external device (100) is detected by the first proximity communication, the controller UC may execute a process setting the second proximity communication to the original setting S02. This configuration enables restoring second proximity communication to the original setting S02 when proximity to the external device (100) is no longer detected. This configuration provides a wireless communication device that can further improve user convenience.

Executing a process restoring the original setting is not limited to changing a communication-enabled setting to a communication-disabled setting, and includes not changing the communication-enabled setting.

### Embodiment 6

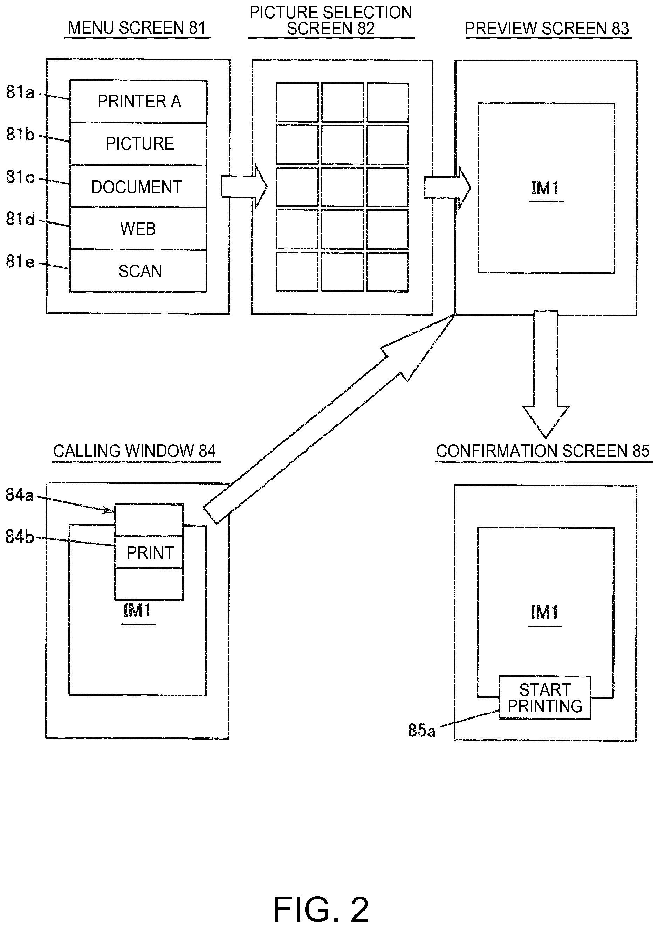

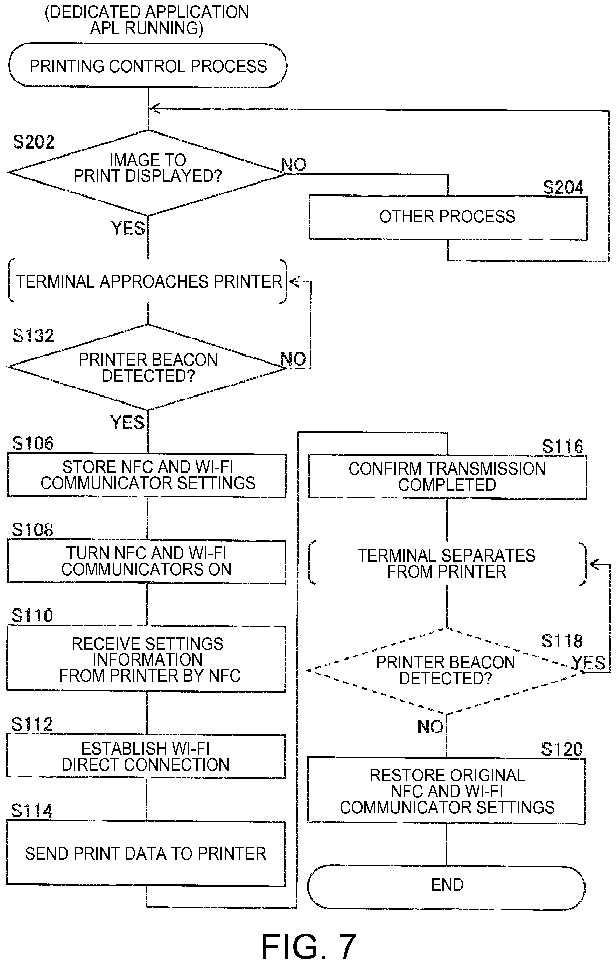

As shown in FIG. 2 and FIG. 7, the controller UC, when a screen (such as the preview screen 83 shown in FIG. 2) for executing a process (such as printing) requiring second proximity communication (such as proximity communication by NFC) with the external device (100) is displayed, and proximity to the external device (100) is detected by first proximity communication (such as proximity communication by BLE), may execute a process enabling communication by the second proximity communication. When the screen (83) for executing a process requiring second proximity communication with the external device (100) is displayed, and proximity to the external device (100) is detected, the likelihood of a process requiring second proximity communication with the external device (100) is high. In this event, this configuration can enable second proximity communication. This configuration provides a wireless communication device that can further improve user convenience.

A process requiring second proximity communication with an external device includes printing when the external device is a printer, displaying information when the external device is a display, and scanning a document when the external device is an image scanning device, for example.

### Embodiment 7

As shown in FIG. 2 and FIG. 7, the controller UC, when an image IM1 that received an operation to display is displayed, and proximity to the external device (100) is detected by first proximity communication (such as proximity communication by BLE), may execute a process enabling communication by the second proximity communication (such as proximity communication by NFC). When an image IM1 that received an operation to display is displayed and proximity to the external device (100) is detected, the likelihood is high that the displayed image IM1 will be sent to the external device (100) and processed by the external device (100). For example, when the external device (100) is a printer, the displayed image IM1 will very likely be printed by the printer. In such cases, this configuration enables second proximity communication. This configuration provides a wireless communication device that can further improve user convenience.

### Embodiment 8

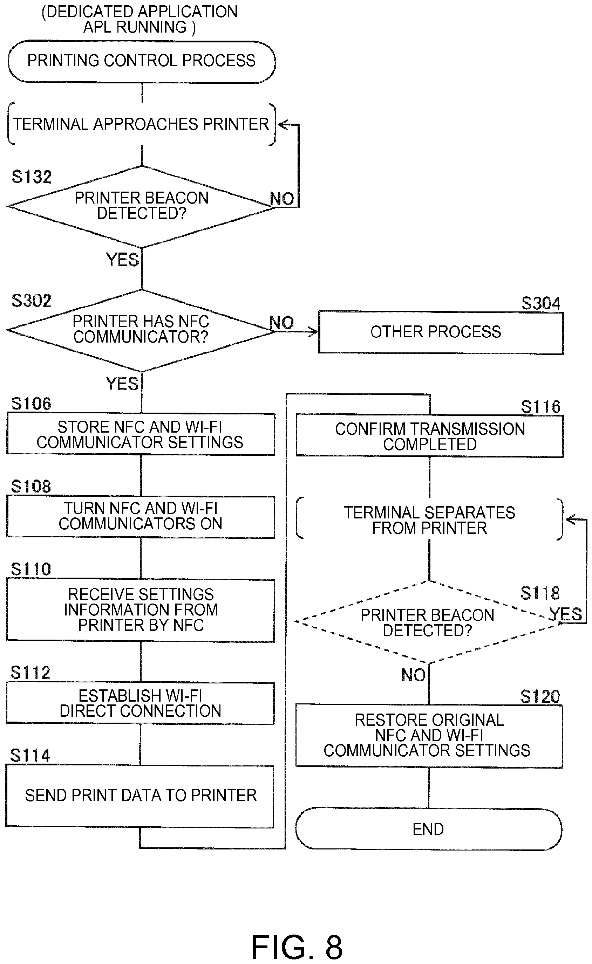

As shown in FIG. 8, the controller UC, when proximity to the external device (100) is detected by first proximity communication (such as proximity communication by BLE), and the information received from the external device (100) by the first wireless communicator U1 is information indicating compatibility with the second proximity communication (such as proximity communication by NFC), may execute a process enabling communication by the second proximity communication. This configuration enables enabling second proximity communication when the external device (100) is compatible with the second proximity communication protocol. This configuration provides a wireless communication device that can further improve user convenience.

### Embodiment 9

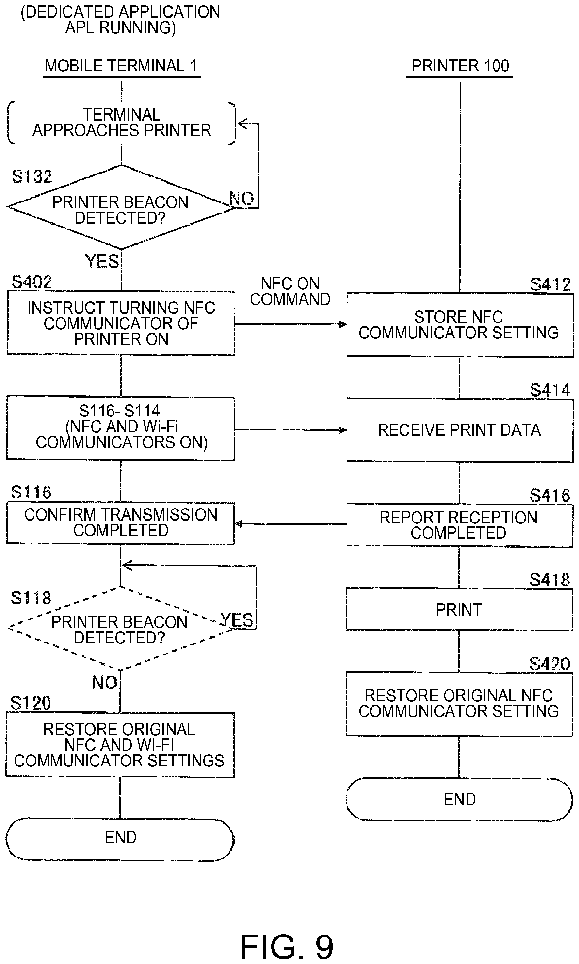

As shown in FIG. 1, the external device (100) may also have a wireless communicator for external devices U12 that communicates by the second proximity communication when communication by the second proximity communication protocol (such as proximity communication by NFC) is enabled. As shown in FIG. 9, the controller UC, when a first proximity communication connection (such as proximity communication by BLE) with the external device (100) is established by the first wireless communicator U1, may execute a process sending information (such as an NFC On command) setting the wireless communicator for external devices U12 to an enabled state to the external device (100) by the first wireless communicator U1. When a first proximity communication connection to the external device (100) is established, this configuration enables enabling the wireless communicator for external devices U12 for communication by the second proximity communication protocol. This configuration provides a wireless communication device that can further improve user convenience.

### Embodiment 10

A control method of a wireless communication device (1) according to another aspect of the invention includes executing a process enabling setting wireless communication to a second proximity communication protocol (such as proximity communication by NFC) when proximity to an external device (100) is detected by a first proximity communication protocol (such as proximity communication by BLE). This configuration provides a control method of a wireless communication device that can improve user convenience. Control methods compatible with embodiments 2 to 9 are obviously included in this technology.

### Embodiment 11

A control program of a wireless communication device (1) according to another aspect of the invention causes a computer to embody a function executing a process that setting wireless communication to a second proximity communication protocol (such as proximity communication by NFC) when proximity to an external device (100) is detected by a first proximity communication protocol (such as proximity communication by BLE). This configuration provides a control program of a wireless communication device that can improve user convenience. Control programs compatible with embodiments 2 to 9 are obviously included in this technology.

The technology of the invention can be applied to multifunction devices having a wireless communication device, a control method of a multifunction device, a control program of a multifunction device, and a computer-readable medium recording a control program of a wireless communication device and multifunction device. The foregoing devices may also be configured by multiple discrete parts.

### (2) Specific configuration of a printing system

FIG. 1 schematically illustrates the configuration of a printing system including a wireless communication device. The printing system SY1 shown in FIG. 1 includes a printer 100 (an example of an external device) with a scanner, and a mobile terminal (an example of a wireless communication device) 1.

The printer 100 shown in FIG. 1 according to this embodiment is a multifunction device including a BLE communicator 110, NFC communicator 120, Wi-Fi communicator 130, controller 140, display operator 148, printing mechanism 150, and scanning mechanism 160. When a printer, which is a type of image forming device, is used as the external device using the technology of the invention, the printer is not limited to a printer with a scanner, and may be a printer incorporating a fax machine, or a simple printer without a scanner, for example.

BLE communicator 110 enables proximity communication using the BLE (Bluetooth(R) Low Energy) protocol enabling proximity communication with very low power consumption. BLE uses the 2.4 GHz band (ISM band), and has a maximum communication speed of 1 Mbps. Note that proximity communication by BLE is an example of first proximity communication herein.

The NFC communicator 120 is an NFC tag for communicating by near-field communication with the mobile terminal 1, and includes an IC chip storing information, a loop antenna, and a communication circuit. The data transmission rate by NFC proximity communication is approximately 100 - 400 kbps, for example. The communication range of NFC is less than the communication range by BLE. NFC is an example of second proximity communication herein.

A contact 172 for making contact with the mobile terminal 1 is disposed to the case 171 of the printer 100 (such as the display operator 148 forming part of the case on the front of the printer 100). The NFC communicator 120 is disposed behind the contact 172. The NFC communicator 120 readably stores settings information DA1 for configuring wireless communication by the Wi-Fi communicator 130, and wirelessly transmits the settings information DA1 by NFC when the NFC communicator 20 of the mobile terminal 1 is in proximity to the contact 172. The SSID (Service Set Identifier) and password of the access point function of the printer 100, the MAC address (Media Access Control Address) of the printer 100, the serial number of the printer 100, or other information uniquely identifying the printer 100, may be used as the settings information DA1.

The Wi-Fi communicator 130 is a communication interface enabling communicating over a greater distance than possible by NFC or BLE. When the Wi-Fi communicator 130 communicates wirelessly by Wi-Fi Direct, a wireless LAN interface can be used as the Wi-Fi communicator 130.

Wi-Fi Direct is a peer-to-peer communication protocol enabling devices to communicate directly instead of going through a wireless LAN access point or wireless LAN router. Wireless communication by Wi-Fi Direct has a greater communication range than proximity communication by NFC, and a higher data transmission rate than NFC. Large amounts of data can therefore be exchanged by Wi-Fi Direct wireless communication after recognizing the mobile terminal 1 by NFC proximity communication. Wireless communication by Wi-Fi Direct is an example of a third wireless communication herein. Below, Wi-Fi communication by Wi-Fi Direct is referred to as Wi-Fi communication.

The controller 140 has a CPU (Central Processing Unit) 141, and memory 142. The CPU 141 controls data processing and control of other parts of the printer 100. The memory 142 may be ROM (Read Only Memory), RAM (Random Access Memory), or nonvolatile memory such as flash memory. Stored in memory 142 are a control program P0, a setting SU12 indicating whether NFC proximity communication is on or off (enabled or disabled), read image IM1 data, for example. The control program P0 causes the printer 100 to execute functions controlling other printer parts 110, 120, 130, 140, 148, 150, 160.

The display operator 148 includes a display unit such as an LCD panel, and an operating unit including multiple keys, for example, displays on the display unit the operating status of the printer 100 and various configuration screens, and receives user operations through the operating unit. If an LCD panel is used as the display unit, and a touch panel overlaid to the LCD panel is used as the operating unit, user operations can be received by touch operations on the LCD screen.

The printing mechanism 150 prints images on a print substrate such as photographic paper, plain paper, and OHP (overhead projector) film. For example, when the printer 100 receives image IM1 data from the mobile terminal 1, the printing mechanism 150 forms the image IM1 on the print substrate according to the data. The printing mechanism 150 may be an inkjet print mechanism or an electrophotographic printing mechanism, for example.

The scanning mechanism 160 reads an image IM1 exposes a document to light from a light source, and captures an image IM1 of the document. The scanning mechanism 160 may be a flatbed scanner in which the document is placed between a document glass and document cover, or a scanner with a document feeder, for example.

The mobile terminal 1 shown in FIG. 1 includes a BLE communicator 10, NFC communicator 20, Wi-Fi communicator 30, controller 40, display operator 48, speaker 51, audio input unit 52, camera 53.

The mobile terminal 1 may be a smartphone or other cell phone, tablet computer, notebook computer, PDA (Personal Digital Assistant), mobile music player, mobile video player, or mobile video player, for example.

BLE communicator 10 enables BLE proximity communication with the printer 100 or other external device. Note that proximity communication by BLE is an example of first proximity communication herein.

The NFC communicator 20 is an NFC reader for communicating by near-field communication with the printer 100 or other external device, and includes an NFC router, IC chip, a loop antenna, and communication circuit. The NFC communicator 20 communicates by NFC proximity communication when NFC proximity communication is turned on (enabled) in the mobile terminal 1 settings, and does not communicate by NFC proximity communication when NFC proximity communication is turned off (disabled). Note that herein "on" means a communication-enabled setting, and "off" means a communication-disabled setting. A setting SU2 indicating if NFC proximity communication is on or off is stored in the 42 of the controller 40.

The NFC communicator 20 and controller 40 that controls the NFC communicator 20 are an example of a second wireless communicator U2 that communicates by second proximity communication when communication by the second proximity communication protocol is enabled.

A contact 72 for making contact by the mobile terminal 1 with the external device (100) is disposed to the case 71 of the mobile terminal 1 (such as to the back of the mobile terminal 1). The NFC communicator 20 is disposed inside the mobile terminal 1 near the contact 72. The NFC communicator 20 wirelessly receives by NFC information from the NFC tag when in proximity to the NFC tag. Note that the NFC reader may be an NFC reader/writer also having the ability to write data to the other IC.

The Wi-Fi communicator 30 is a communication interface enabling communicating with the external device (100) over a greater distance than possible by proximity communication. When the Wi-Fi communicator 130 communicates by Wi-Fi, a wireless LAN interface can be used as the Wi-Fi communicator 30. The Wi-Fi communicator 30 communicates by Wi-Fi when Wi-Fi communication is on, and when Wi-Fi communication is off, does not communicate by Wi-Fi. A setting SU3 indicating whether Wi-Fi communication is on or off is stored in the memory 42 of the controller 40. The Wi-Fi communicator 30 and controller 40 controlling the Wi-Fi communicator 30 are an example of a third wireless communicator U3.

The controller 140 has a CPU 41, and memory 42. The CPU 41 controls data processing and control of other parts of the mobile terminal 1. The memory 142 may be ROM (Read Only Memory), RAM (Random Access Memory), or nonvolatile memory such as flash memory. Stored in memory 42 are an operating system (OS), application program APL, settings information DA1, setting SU2 indicating whether NFC proximity communication is on or off, setting SU3 indicating if Wi-Fi communication is on or off, and original settings S02, S03 that are temporarily stored. By installing a printer application APL compatible with the printer 100 on the mobile terminal 1, the printer application APL and OS working together can make the mobile terminal 1 function as a wireless communication device according to this embodiment of the invention.

The memory 42 is an example of memory UM storing a printer application.

The controller 40 is an example of a controller UC.

The controller may be configured with one or more CPUs, ASICs (Application Specific Integrated Circuit), or a configuration embodied by the cooperation of the same.

The display operator 48 includes a display unit such as an LCD panel, and an operating unit including multiple keys, for example, displays on the display unit the operating status of the mobile terminal 1 and various configuration screens, and receives user operations through the operating unit. If an LCD panel is used as the display unit, and a touch panel overlaid to the LCD panel is used as the operating unit, user operations can be received by touch operations on the LCD screen. The operating unit may obviously be configured with multiple keys.

The speaker 51 outputs audio based on audio signals from a telephone circuit, for example. The speaker 51 may be a common speaker. The audio input unit 52 converts audio from the user to audio signals. The audio input unit 52 may be a common microphone.

The camera 53 includes an optical system with one or more lenses, an area image sensor, and image processing circuit, for example, and generates digital data representing the captured image IM1.

FIG. 2 schematically illustrates screens displayed by the mobile terminal 1. Screens 81 - 85 shown in FIG. 2 are presented by functions of the printer application APL executed by the mobile terminal 1.

When the printer application APL executes, the menu screen 81 shown in FIG. 2 is displayed. This menu screen 81 includes a current printer display area 81a, an operating area 81b for selecting a picture file, an operating area 81c for selecting a document file, an operating area 81d for selecting a home page, and an operating area 81e for configuring scanner operation.

The name of the model of the printer 100, for example, is displayed in the current printer display area 81a.

When the user touches operating area 81b, a picture selection screen 82 is displayed. Thumbnail images of multiple photographs are displayed in this screen 82. When the user selects by touching one of the pictures in the picture selection screen 82, a preview screen 83 of the selected picture is displayed. The picture displayed in this preview screen 83 is the image IM1 to be printed. When this image IM1 can be printed by the printer 100, a confirmation screen 85 for confirming starting printing the image IM1 is displayed. When the Start Printing area 85a of the confirmation screen 85 is touched and selected, the image IM1 is printed by the printer 100.

The printer application APL can be started by being called by another application. For example, when another application is running, an image IM1 to print is selected, and an operation menu 84a is displayed, a print operation field 84b, which is added by installing the printer application APL, is displayed. The operation menu 84a in which the print operation field 84b is provided is displayed in the calling window 84 shown in FIG. 2. When the user operates by touching the print operation field 84b, a calling processing that starts the printer application APL is executed, and a preview screen 83 of the image IM1 to print is displayed.

By holding the NFC communicator of the mobile terminal close to the NFC communicator of the external device, the mobile terminal and external device can easily exchanged information, and various functions can thereby be achieved. However, these functions can only be used when the NFC function of the mobile terminal is on.

Conserving the power consumption of mobile terminals has become increasingly important while security issues, such as the unauthorized use (theft) of electronic money through the NFC function, have arisen. As a result, the mobile terminal is typically used with the NFC function of the mobile terminal turned off by default, and or turned off by the user.

If the NFC function is off, information cannot be communicated with the external device even if the mobile terminal is in sufficient proximity to the external device, and built-in functions cannot be used through NFC. Furthermore, because the external device also cannot detect a mobile terminal in proximity, the external device cannot send a message prompting the user to turn the NFC function of the mobile terminal on. The user must also be aware of whether the wireless communication functions of the mobile terminal are on or off because some wireless connection methods using NFC also use Wi-Fi, with which the printer is compatible.

However, the interface for turning NFC on and off on the mobile terminal is often buried deep in the device settings and difficult for the user to find. As a result, the user is often confused or encumbered by needing to manually turn the NFC function of the mobile terminal on or off, and even if the user knows how to change the setting, it is tedious and time-consuming.

These factors reduce usability.

BLE proximity communication has become more common as a Bluetooth(R) proximity communication method having a greater communication range than NFC. Because BLE communication consumes significantly less power than conventional Bluetooth(R) communication, BLE is often always on when built in to a mobile terminal.

Therefore, when a mobile terminal with a BLE communicator is in proximity to an external device having a BLE communicator, this specific example uses BLE proximity communication, which unlike conventional Bluetooth(R) proximity communication is always on, to automatically turn the NFC function and Wi-Fi function of the mobile terminal on.

Examples of processes executed by the printing system SY1 described above are described next.

Note that the printer 100 and mobile terminal 1 are multitasking devices that can execute multiple processes in parallel. The processes executed to embody the technology of the invention, such as the processes shown in FIG. 3 and FIG. 6 to FIG. 9, are not limited to being executed by a CPU, and may be executed by other electronic devices, such as an ASIC (Application Specific Integrated Circuit). The processes executed to embody the technology of the invention may also be distributed and executed by multiple CPUs, or executed cooperatively by a CPU and other electronic components (such as an ASIC).

### (3) First process of the wireless communication device

FIG. 3 is a flow chart of the printing control process whereby the mobile terminal 1 causes the printer 100 to print an image IM1. This process supposes that a dedicated application for the printer is installed on the mobile terminal 1, and the dedicated application program APL starts and the NFC function and Wi-Fi function are turned on when the mobile terminal 1 goes to within a specific distance of the printer 100. Steps S102 - S104 are executed by the OS, and steps S106 - S122 are executed by the dedicated application. Note that "step" may be omitted below.

The printing control process shown in FIG. 3 repeats while the mobile terminal 1 power is on. The OS and dedicated application APL that execute steps S102 - S122 cause the mobile terminal 1 to function as the controller UC.

Note also that processes executed by the mobile terminal 1 through the OS are referred to as OS processes below, and processes executed by the mobile terminal 1 through the application program APL are referred to as APL processes.

The BLE communicator 10 of the mobile terminal 1 is always on, and can receive beacon signals from the printer 100 by BLE communication. The OS constantly monitors if a beacon was detected by BLE communication.

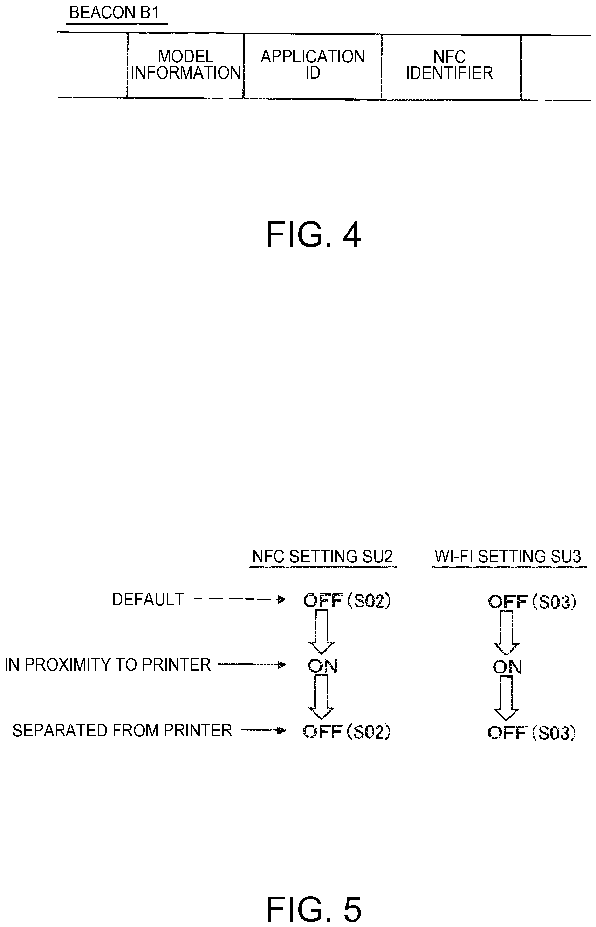

FIG. 4 schematically illustrates the format of a beacon signal sent by BLE communication from the printer 100. The beacon signal B1 shown in FIG. 4 includes model information indicating the model of printer 100, an application ID identifying the application to execute when the beacon signal B1 is detected, and an NFC identifier identifying whether or not the printer 100 has an NFC communicator 120.

When the printing control process shown in FIG. 3 has started, and the user of the mobile terminal 1 approaches the printer 100, that is, when the mobile terminal 1 is in proximity to the printer 100, the OS determines if a beacon signal B1 was received from the printer 100 by BLE communication (S102). Step S102 repeats until a beacon signal B1 is detected.

The BLE communicator 10 can receive a beacon signal B1 from the printer 100 when the mobile terminal 1 is within a specific distance from the printer 100. When the beacon signal B1 is received, the mobile terminal 1 detects from the BLE communication that the mobile terminal 1 is within the specific distance of the printer 100. When the beacon signal B1 is received, the OS starts the dedicated application APL specified by the application ID contained in the beacon signal B1 (S104). When the dedicated application APL starts, the menu screen 81 shown in FIG. 2 is displayed on the mobile terminal 1.

After the dedicated application APL starts, the dedicated application APL stores the setting SU2 of the NFC communicator 20 and the setting SU3 of the Wi-Fi communicator 30 in memory 42 (S106).

The setting SU2 of the NFC communicator 20 is the original setting S02 that was set for NFC communication, and the setting SU3 of the Wi-Fi communicator 30 is the original setting S03 that was set for Wi-Fi communication.

After storing the settings of the NFC communicator 20 and Wi-Fi communicator 30, the dedicated application APL executes a processing turning NFC communication and Wi-Fi communication on (S108).

FIG. 5 schematically illustrates changing the setting SU2 of the NFC communicator 20 and the setting SU3 of the Wi-Fi communicator 30 according to the location of the mobile terminal 1 when both NFC communication and Wi-Fi communication are off by default. In the example in FIG. 5, the off setting for the NFC communicator 20 is stored as original setting S02, and the off setting of the Wi-Fi communicator 30 is stored as the original setting S03.

When the mobile terminal 1 is in proximity to the printer 100, the setting SU2 of the NFC communicator 20 changes from off to on, and the setting SU3 of the Wi-Fi communicator 30 changes from off to on, in S108. Therefore, when proximity to the printer 100 is detected by BLE communication, NFC communication is turned on and Wi-Fi communication is turned on.

Of course, if the original setting S02 of the NFC communicator 20 was on, the setting SU2 of the NFC communicator 20 remains on, and if the original setting S03 of the Wi-Fi communicator 30 was on, the setting SU3 of the Wi-Fi communicator 30 remains on.

Next, when the user holds the contact 72 of the mobile terminal 1 near the contact 172 of the printer 100, the dedicated application APL communicates by NFC through the NFC communicator 20 with the printer 100, and receives and stores settings information DA1 for Wi-Fi communication from the printer 100 in memory 42 (S110). At this time, the NFC communicator 120 of the printer 100 transmits settings information DA1, which is identification information for the printer 100, by NFC. By the NFC communicator 20 of the mobile terminal 1 receiving the settings information DA1, an initial connection is established between the mobile terminal 1 and printer 100.

After receiving the settings information DA1, the dedicated application APL establishes a wireless connection with the printer 100 through the Wi-Fi communicator 30 based on the settings information DA1 (S112). For example, the Wi-Fi communicator 30 of the mobile terminal 1 sends a connection request including the settings information DA1 (such as SSID and password), and when the Wi-Fi communicator 130 of the printer 100 receives the connection request, a Wi-Fi connection is opened between the mobile terminal 1 and printer 100.

For example, if the SSID and password contained in the settings information DA1 are the SSID and password of an access point integral to the printer, a direct wireless connection (Wi-Fi Direct connection) is established between the mobile terminal and printer instead of going through an external access point. If the SSID and password contained in the settings information DA1 are the SSID and password of an external access point connected to the printer, a Wi-Fi connection may be established between the mobile terminal and printer through the external access point. To establish a Wi-Fi connection, information other than the settings information DA1 may also be sent by the Wi-Fi communicator 30 of the mobile terminal and received by the Wi-Fi communicator 130 of the printer.

When a Wi-Fi connection is established, selection of the image IM1 to print is received, print data conforming to the specifications of the printer 100 is generated from the image IM1 to print, and sent by Wi-Fi to the printer 100 (S114).

For example, when the menu screen 81 shown in FIG. 2 is displayed on the mobile terminal 1, and the operating area 81b for selecting a picture is touched, the dedicated application APL displays the picture selection screen 82, and when one of the pictures in the picture selection screen 82 is touched, the application program APL presents a preview screen 83 of the selected picture.

When a Wi-Fi connection is established by the process of S112, the dedicated application APL displays a confirmation screen 85 for confirming stating printing the image IM1 shown in the preview screen 83.

When the Start Printing area 85a of the confirmation screen 85 is touched, the dedicated application APL generates print data from the image IM1 shown in the confirmation screen 85 and sends the print data to the printer 100. The printer 100 receives the print data by Wi-Fi, and when all print data is received, sends a reception completed report by Wi-Fi to the printer 100.

When the mobile terminal 1 receives the reception completed report by Wi-Fi, completion of print data transmission is confirmed (S116). At this time, the dedicated application APL may also display a message that transmission of the image IM1 data was completed. The printer 100 that received the print data then drives the printing mechanism 150 to print the image IM1 on the print substrate according to the print data

When the user confirms the image IM1 was printed and moves with the mobile terminal 1 away from the printer 100, that is, when the mobile terminal 1 separates from the printer 100, the dedicated application APL determines if the BLE beacon signal B1 from the printer 100 is detected (S118), and repeats the process of S118 until the beacon signal B1 is not detected.

The process of S118 can be executed by receiving from the OS information indicating whether or not the beacon signal B1 of the printer 100 is detected.

When the mobile terminal 1 separates more than the specific distance from the printer 100, the BLE communicator 10 cannot receive a beacon signal B1 from the printer 100. When the beacon signal B1 is not received, it is no longer possible to detect by BLE communication that the mobile terminal 1 is within a specific distance of the printer 100. In this event, the dedicated application APL executes a process restoring NFC communication and Wi-Fi communication to the original setting S02, S03 (S120).

In the example in FIG. 5, when the mobile terminal 1 separates from the printer 100, the process of S120 changes the setting SU2 of the NFC communicator 20 from on to the default off setting, and changes the setting SU3 of the Wi-Fi communicator 30 from on to the default off setting. Therefore, when proximity to the printer 100 is no longer detected by NFC, the NFC setting is reset to off, and Wi-Fi communication is reset to off.

Obviously, if the original setting S02 of the NFC communicator 20 was on, the setting SU2 of the NFC communicator 20 remains on, and if the original setting S03 of the Wi-Fi communicator 30 was on, the setting SU3 of the Wi-Fi communicator 30 remains on.

The dedicated application APL then shuts down (S122), and the printing control process ends.

Step S122 may be omitted from the printing control process shown in FIG. 3 so that the dedicated application APL does not shut down.

In this example as described above, when NFC and Wi-Fi communication are off (are not set to enable communication) and the mobile terminal 1 is in proximity to the printer 100, NFC communication and Wi-Fi communication are turned on (enabling communication). This avoids being unable to communicate by NFC or Wi-Fi when the mobile terminal 1 is in proximity to the printer 100. The user also does not need to go through the troublesome task of drilling deep into a settings hierarchy to find the screen for turning NFC communication and Wi-Fi communication on or off.

This configuration therefore provides technology capable of improving user convenience.

The process of S118 may also be omitted from the printing control process in FIG. 3, and the process of resetting NFC communication and Wi-Fi communication to the original setting S02, S03 in S116 may be executed triggered by receiving the print data reception completed report from the printer 100 in S116. In this case, the printing control process is interrupted even while the mobile terminal 1 is within the specific distance of the printer 100, but the OS may restart the printing control process when the mobile terminal 1 is within the specific distance of the printer 100.

### (4) Second process of the wireless communication device

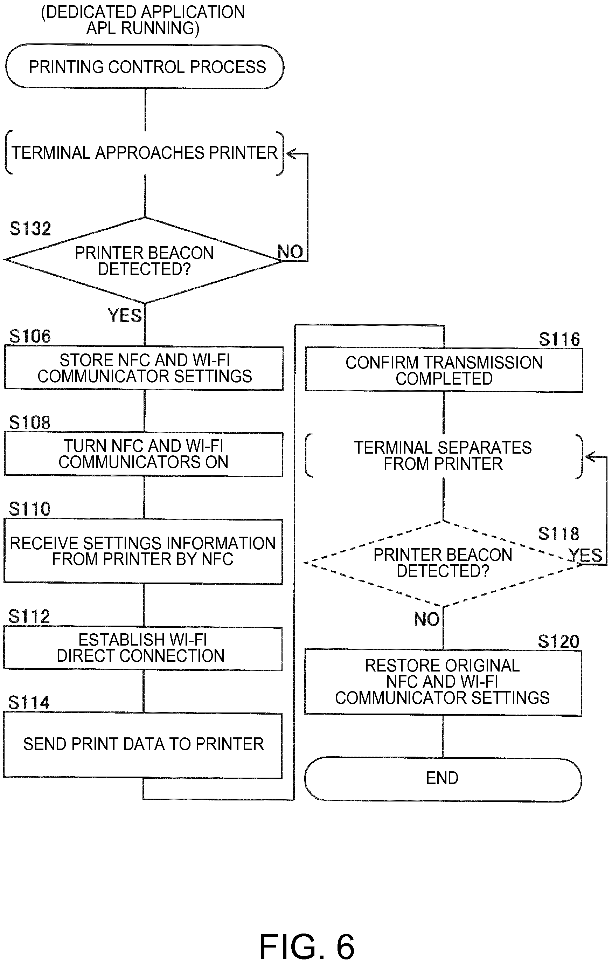

FIG. 6 shows another example of the printing control process. This process supposes that a dedicated application for the printer is installed on the mobile terminal 1 and running, and the dedicated application program APL turns the NFC function and Wi-Fi function on when the mobile terminal 1 goes to within a specific distance of the printer 100. The menu screen 81 shown in FIG. 2 is displayed on the mobile terminal 1 as a result of the dedicated application APL starting. The printing control process shown in FIG. 6 repeats while the dedicated application APL is running. Compared with the printing control process shown in FIG. 3, the printing control process in FIG. 6 omits steps S102 - S104, S122, and executes step S132 before S106. The dedicated application APL executing steps S132, S106 - S120 causes the mobile terminal 1 to function as the controller UC.

Once the printing control process in FIG. 6 has started, when the mobile terminal 1 approaches the printer 100, the dedicated application APL determines if a beacon signal B1 received from the printer 100 by BLE communication was detected (S132), and step S132 repeats until a beacon signal B1 is detected. When the mobile terminal 1 comes to within a specific distance of the printer 100, the beacon signal B1 is detected, and the dedicated application APL stores the setting SU2 of the NFC communicator 20 and the setting SU3 of the Wi-Fi communicator 30 in memory 42 (S106).

Next, the dedicated application APL executes the process turning NFC communication and Wi-Fi communication on, receives settings information DA1 through the NFC communicator 20, opens a Wi-Fi connection, and sends print data to the printer 100 (S108 - S114).

For example, when the dedicated application APL displays on the mobile terminal 1 the preview screen 83 through the picture selection screen 82 from the menu screen 81 shown in FIG. 2, the confirmation screen 85 is displayed by opening a Wi-Fi connection. When a Start Printing area 85a on the confirmation screen 85 is touched, the dedicated application APL generates and sends to the printer 100 print data based on the image IM1 displayed in the confirmation screen 85.

When the mobile terminal 1 receives the reception completed report from the printer 100 by wireless communication of the Wi-Fi communicator (S116), and the mobile terminal 1 separates from the printer 100, the dedicated application APL determines if a beacon signal B1 from the printer 100 was received by BLE communication (S118). When the beacon signal B1 is no longer detected, the dedicated application APL executes the process restoring NFC communication and Wi-Fi communication to the original setting S02, S03 (S120), and ends the printing control process.

As described above, this second process also avoids being unable to communicate by NFC or Wi-Fi when the mobile terminal 1 moves into proximity to the printer 100 when NFC communication and Wi-Fi communication are both off. This second process also provides technology capable of improving user convenience.

### (5) Third process of the wireless communication device

FIG. 7 shows another example of the printing control process. This process supposes that a dedicated application for the printer is installed on the mobile terminal 1 and running, the mobile terminal 1 is displaying the preview screen 83, and the dedicated application program APL turns the NFC function and Wi-Fi function on when the mobile terminal 1 goes to within a specific distance of the printer 100. The printing control process shown in FIG. 7 repeats while the dedicated application APL is running. Compared with the printing control process shown in FIG. 6, the printing control process in FIG. 7 adds steps S202 to S204 before step S132. The dedicated application APL executing steps S202 - S204, S132, S106 - S120 causes the mobile terminal 1 to function as a controller UC.

Once the printing control process in FIG. 7 has started, the dedicated application APL proceeds depending on whether or not the preview screen 83 of the image IM1 to print is displayed (S202). Note that here "printing" is an example of a process that requires an NFC connection to the printer 100; the preview screen 83 is an example of a screen for executing a process requiring an NFC connection to the printer 100; and the image IM1 in the preview screen 83 is an example of an image that received an operation to display.

When the preview screen 83 is not displayed, the dedicated application APL executes a different process than the process of S132, S106 - S120 (S204), and then returns to S202.

If the preview screen 83 is displayed, the dedicated application APL executes the same process of S132, S106 - S120 described in the second process above, and then ends the printing control process.

When a preview screen 83 of an image IM1 that received an operation to display is displayed, and proximity to the printer 100 is detected by BLE communication, a process turning NFC communication and Wi-Fi communication on is executed. When the preview screen 83 is not displayed, the current NFC communication and Wi-Fi communication settings are maintained even if proximity to the printer 100 is detected.

When a preview screen 83 of an image IM1 that received an operation to display is displayed, and proximity to the printer 100 is detected, there is a good likelihood that printing will follow. Because NFC communication and Wi-Fi communication are turned on in this event, the third process also provides technology capable of improving user convenience.

### (6) Fourth process of the wireless communication device

FIG. 8 shows another example of the printing control process. This process is limited to when the printer 100 has a NFC communicator 120, and supposes that a dedicated application APL turns the NFC function and Wi-Fi function on when the mobile terminal 1 goes to within a specific distance of the printer 100. The printing control process shown in FIG. 8 repeats while the dedicated application APL is running. Compared with the printing control process shown in FIG. 6, the printing control process in FIG. 8 adds steps S302 - S304 between steps S132 and S106. The dedicated application APL executing steps S132, S302 - S304, S106 - S120 causes the mobile terminal 1 to function as a controller UC.

When the dedicated application APL in S132 detects a beacon signal B1 from the printer 100 by BLE communication, the dedicated application APL determines whether or not the printer 100 has a NFC communicator 120 (S302).

For example, the beacon signal B1 as shown in FIG. 4 includes an NFC identifier indicating whether or not the printer 100 has a NFC communicator 120. In this case, the dedicated application APL can simply determine whether or not the NFC identifier in the beacon signal B1 indicates that the printer 100 has an NFC communicator 120. If the printer 100 does not have an NFC communicator 120, the dedicated application APL executes a different process than steps S106 - S120 (S304).

If the printer 100 has an NFC communicator 120, the dedicated application APL executes the same process of S106 - S120 described in the second process above, and then ends the printing control process.

Thus comprised, when proximity to the printer 100 is detected by BLE communication, a process turning NFC communication and Wi-Fi communication on is executed if the information the NFC communicator 20 receives from the printer 100 is information indicating compatibility with NFC proximity communication. If the printer 100 is not compatible with NFC, the current NFC communication and Wi-Fi communication settings are maintained even when the mobile terminal 1 is in proximity to the printer 100.

If the printer 100 is not compatible with NFC, and NFC communication and Wi-Fi communication are turned on, power consumption increases and security may drop. In this fourth process, NFC is enabled only when the printer 100 is compatible with NFC. This fourth process therefore also provides technology capable of improving user convenience.

Note that as shown in FIG. 3, this fourth process may be modified so that the OS starts the dedicated application APL.

### (7) Fifth process of the wireless communication device

FIG. 9 shows an example of a process executed by the mobile terminal 1 and printer 100. This process supposes that the NFC communicator 120 of the printer 100 is configured to be turned on (enabled) or off (disabled) by a user operation of the display controller, for example, and information turning the NFC communicator 120 of the printer 100 on is sent by BLE communication from the mobile terminal 1 to the printer 100, causing the NFC communicator 120 of the printer 100 to turn on. Note that setting SU12 indicating whether or not NFC is on or off is stored in the memory 142 of the controller 140. The NFC communicator 120 and controller 140 that controls the NFC communicator 120 are an example of a wireless communicator for external devices U12. The process shown in FIG. 9 repeats. Compared with the second printing control process shown in FIG. 6, the printing control process of the mobile terminal 1 adds step S402 between steps S132 and S106. The dedicated application APL executing steps S132, S402, S106 - S120 causes the mobile terminal 1 to function as a controller UC.

When the dedicated application APL in S132 detects a beacon signal B1 from the printer 100 by BLE communication, the dedicated application APL opens a BLE connection to the printer 100 through the BLE communicator 10, and executes a process sending to the printer 100 by the BLE communicator 10 an NFC On command, which is information to turn the NFC communicator 120 of the printer 100 on (S402). When the NFC On command is received by the BLE communicator 110, the printer 100 stores the setting SU12 of the NFC communicator 120 to memory 142 (S412).

After sending the NFC On command, the dedicated application APL executes the same process of S106 - S114 in FIG. 6, executes a process turning NFC communication and Wi-Fi communication on, and sends the print data by Wi-Fi to the printer 100. The printer 100 receives the print data by Wi-Fi (S414), and when receiving the print data ends, sends a reception completed report by Wi-Fi to the mobile terminal 1 (S416). When the mobile terminal 1 receives the reception completed report by Wi-Fi, completion of print data transmission is confirmed (S116). Next, the dedicated application APL executes the same process as S118 - S120 in FIG. 6, and then ends the printing control process.

After sending the reception completed report, the printer 100 prints the image IM1 on the print substrate by the printing mechanism 150 according to the print data (S418). Next, the printer 100 executes a process resetting NFC to the original setting stored in memory 142 (S420), and ends the printing process.

As described above, when the mobile terminal 1 executes a process establishing a BLE connection with the printer 100 by the BLE communicator 10, and sends an NFC On command by the BLE communicator 10 to the printer 100, the BLE communicator 110 of the printer 100 turns on, and a wireless connection is established between the mobile terminal 1 and printer 100. This fifth process also provides technology capable of improving user convenience.

Note that as shown in FIG. 3, the printing control process in this fifth example may be modified so that the OS starts the dedicated application APL.

### (8) Other embodiments

The invention is not limited to the foregoing embodiments, and can be varies in many ways.

For example, the external device may be an image reading device such as a single-function scanner, or a multifunction printer, or a fax machine.

The order of the steps in the foregoing processes may also be changed as desired. For example, in the printing process of the printer 100 in FIG. 9, the printing step S418 of printing the image IM1 may be executed before the process sending the reception completed report in S416.

Furthermore, when the Wi-Fi communication function of the mobile terminal 1 is always on, storing the Wi-Fi communication setting in step S106 in FIG. 3 and FIG. 6 to FIG. 9 may be omitted, turning Wi-Fi communication on in S108 of FIG. 3 and FIG. 6 to FIG. 9 may be omitted, and restoring the Wi-Fi communication setting in S120 of FIG. 3 and FIG. 6 to FIG. 9 may be omitted.

When information indicating the distance between the mobile terminal and external device is contained in a beacon signal from the external device, NFC may be turned on when the distance indicated by the beacon information is within a specific range, and the NFC setting may be maintained when the distance indicated by the beacon information is outside the specific range.

Note that the technology of the invention also includes sending and receiving data by BLE communication between the mobile terminal and external device without using Wi-Fi.

### (9) Summary

As described above, the invention provides in various forms technology that can improve user convenience. The basic operation and effects described above can also be achieved using only the technology comprising the essential elements described in the independent claims below.

Furthermore, configurations replacing or changing the combination of configurations described in the foregoing embodiments, and configurations replacing or changing the combination of configurations described in the foregoing embodiments or in the related art, are also conceivable. Such configurations are also included in the scope of the invention.

## Claims

1. A wireless communication device (1) configured to connect wirelessly to an external device (100), comprising:
a first wireless communicator (10) configured to communicate by a first proximity communication;
a second wireless communicator (20) configured to communicate by a second proximity communication having a shorter communication range than the first proximity communication; and
a controller (40) configured to execute a process enabling communication by the second proximity communication when the first wireless communicator receives a beacon signal from the external device, **characterized in that**
the controller (40) is configured to turn on the second wireless communicator (20) in response to the first wireless communicator (10) receiving a beacon signal from the external device via the first proximity communication in a state in which the second wireless communicator (20) is turned off.

2. The wireless communication device (1) described in claim 1, further comprising:
a third wireless communicator (30) configured to communicate by a third wireless communication having a greater communication range than the second proximity communication;
the controller (40), when the second proximity communication is enabled, receiving setting information for the third wireless communication from the external device (100) by the second wireless communicator (20), and communicating by the third wireless communication with the external device based on the setting information received by the second wireless communicator.

3. The wireless communication device (1) described in claim 2, wherein:
the third wireless communicator (30) handles third wireless communication when communication by the third wireless communication is enabled; and
the controller (40), when proximity to the external device (100) is detected by the first proximity communication, executes a process enabling communication by the third wireless communication.

4. The wireless communication device (1) described in any of claims 1-3, further comprising:
a memory (42) storing an application program (APL) causing a computer to embody a function executing a process enabling communication by the second proximity communication and communicating wirelessly with the external device (100);
wherein the controller (40) when the first wireless communicator (10) receives the beacon signal from the external device, executes a process enabling communication by the second wireless communication by starting the application program.

5. The wireless communication device (1) described in any of claims 1-4, wherein:
the controller (40), when the first wireless communicator (10) receives the beacon signal from the external device (100), stores the original setting set for second proximity communication, and enables communication by the second proximity communication, and
when the first wireless communicator receives the beacon signal from the external device, executes a process restoring the second proximity communication to the original setting.

6. The wireless communication device (1) described in any of claims 1-5, wherein:
the controller (40), when a screen for executing a process requiring second proximity communication with the external device (100) is displayed, and proximity to the external device is detected by first proximity communication, executes a process enabling second proximity communication.

7. The wireless communication device (1) described in any of claims 1-6, wherein:
the controller (40), when an image that received an operation for display is displayed and the first wireless communicator (10) receives the beacon signal from the external device (100), executes a process enabling second proximity communication.

8. The wireless communication device (1) described in any of claims 1-7, wherein:
the controller (40), when the first wireless communicator (10) receives the beacon signal from the external device (100), and information received from the external device by the first wireless communicator is information indicating compatibility with the second proximity communication, executes a process enabling second proximity communication.

9. The wireless communication device (1) described in any of claims 1-8, wherein:
the external device (100) has a wireless communicator (120) for external devices that communicates by the second proximity communication when the second proximity communication is enabled; and
the controller (40), when first proximity communication with the external device is established by the first wireless communicator (10), executes a process sending information by the first wireless communicator to the external device to enable communication by the wireless communicator for external devices.

10. A control method of a wireless communication device (1) configured to connect wirelessly to an external device (100) and including a first wireless communicator (10) configured to communicate by a first proximity communication, and a second wireless communicator (20) configured to communicate by a second proximity communication having a shorter communication range than the first proximity communication, comprising:
executing a process enabling communication by the second proximity communication when the first wireless communicator receives a beacon signal from the external device, **characterized in that**
the process comprises turning on the second wireless communicator in response to the first wireless communicator receiving a beacon signal from the external device via the first proximity communication in a state in which the second wireless communicator is turned off.

11. A non-transitory, computer-readable recording medium storing a control program of a wireless communication device (10) configured to connect wirelessly to an external device (100) and including a first wireless communicator (10) configured to communicate by a first proximity communication, and a second wireless communicator (20) configured to communicate by a second proximity communication having a shorter communication range than the first proximity communication, the control program causing a computer to embody a function of:
executing a process enabling communication by the second proximity communication when the first wireless communicator receives a beacon signal from the external device, **characterized in that**
the process comprises turning on the second wireless communicator in response to the first wireless communicator receiving a beacon signal from the external device via the first proximity communication in a state in which the second wireless communicator is turned off.

## Patentansprüche

1. Drahtlose Kommunikationsvorrichtung (1), die konfiguriert ist, um mit einer externen Vorrichtung (100) drahtlos zu verbinden, umfassend:
einen ersten drahtlosen Kommunikator (10), der konfiguriert ist, um durch eine erste Näherungskommunikation zu kommunizieren;
einen zweiten drahtlosen Kommunikator (20), der konfiguriert ist, um durch eine zweite Näherungskommunikation mit einer kürzeren Kommunikationsreichweite als die erste Näherungskommunikation zu kommunizieren; und
eine Steuerung (40), die konfiguriert ist, um einen Prozess auszuführen, der die Kommunikation durch die zweite Näherungskommunikation aktiviert, wenn der erste drahtlose Kommunikator ein Bakensignal von der externen Vorrichtung empfängt, **dadurch gekennzeichnet, dass**
die Steuerung (40) konfiguriert ist, um den zweiten drahtlosen Kommunikator (20) als Reaktion darauf einzuschalten, dass der erste drahtlose Kommunikator (10) ein Bakensignal von der externen Vorrichtung über die erste Näherungskommunikation in einem Zustand empfängt, in dem der zweite drahtlose Kommunikator (20) ausgeschaltet ist.

2. Drahtlose Kommunikationsvorrichtung (1) nach Anspruch 1, ferner umfassend:
einen dritten drahtlosen Kommunikator (30), der konfiguriert ist, um durch eine dritte drahtlose Kommunikation mit einer größeren Kommunikationsreichweite als die zweite Näherungskommunikation zu kommunizieren;
wobei die Steuerung (40), wenn die zweite Näherungskommunikation aktiviert ist, Einstellungsinformationen für die dritte drahtlose Kommunikation von der externen Vorrichtung (100) durch den zweiten drahtlosen Kommunikator (20) empfängt und durch die dritte drahtlose Kommunikation mit der externen Vorrichtung basierend auf den Einstellungsinformationen, die vom zweiten drahtlosen Kommunikator empfangen werden, kommuniziert.

3. Drahtlose Kommunikationsvorrichtung (1) nach Anspruch 2, wobei:
der dritte drahtlose Kommunikator (30) die dritte drahtlose Kommunikation abwickelt, wenn die Kommunikation durch die dritte drahtlose Kommunikation aktiviert wird; und
die Steuerung (40), wenn die Nähe zur externen Vorrichtung (100) von der ersten Näherungskommunikation detektiert wird, einen Prozess ausführt, der die Kommunikation durch die dritte drahtlose Kommunikation aktiviert.

4. Drahtlose Kommunikationsvorrichtung (1) nach einem der Ansprüche 1-3, ferner umfassend:
einen Speicher (42), der ein Anwendungsprogramm (APL) speichert, das einen Computer dazu veranlasst, eine Funktion zu verkörpern, die einen Prozess ausführt, der die Kommunikation durch die zweite Näherungskommunikation aktiviert und drahtlos mit der externen Vorrichtung (100) kommuniziert;
wobei die Steuerung (40), wenn der erste drahtlose Kommunikator (10) das Bakensignal von der externen Vorrichtung empfängt, einen Prozess ausführt, der die Kommunikation durch die zweite drahtlose Kommunikation durch Starten des Anwendungsprogramms aktiviert.

5. Drahtlose Kommunikationsvorrichtung (1) nach einem der Ansprüche 1-4, wobei:
die Steuerung (40), wenn der erste drahtlose Kommunikator (10) die Bake von der externen Vorrichtung (100) empfängt, die ursprüngliche Einstellung speichert, die für die zweite Näherungskommunikation eingestellt ist, und die Kommunikation durch die zweite Näherungskommunikation aktiviert, und,
wenn der erste drahtlose Kommunikator das Bakensignal von der externen Vorrichtung empfängt, einen Prozess ausführt, bei dem die zweite Näherungskommunikation auf die ursprüngliche Einstellung zurückgesetzt wird.

6. Drahtlose Kommunikationsvorrichtung (1) nach einem der Ansprüche 1-5, wobei:
die Steuerung (40), wenn ein Bildschirm zum Ausführen eines Prozesses, der eine zweite Näherungskommunikation mit der externen Vorrichtung (100) erfordert, angezeigt wird, und die Nähe zu der externen Vorrichtung durch die erste Näherungskommunikation detektiert wird, einen Prozess ausführt, der eine zweite Näherungskommunikation aktiviert.

7. Drahtlose Kommunikationsvorrichtung (1) nach einem der Ansprüche 1-6, wobei:
die Steuerung (40), wenn ein Bild angezeigt wird, das eine Operation zur Anzeige empfangen hat, und der erste drahtlose Kommunikator (10) das Bakensignal von der externen Vorrichtung (100) empfängt, einen Prozess ausführt, der eine zweite Näherungskommunikation aktiviert.

8. Drahtlose Kommunikationsvorrichtung (1) nach einem der Ansprüche 1-7, wobei:
die Steuerung (40), wenn der erste drahtlose Kommunikator (10) das Bakensignal von der externen Vorrichtung (100) empfängt und die Informationen, die von der externen Vorrichtung durch den ersten drahtlosen Kommunikator empfangen werden, Informationen sind, die die Kompatibilität mit der zweiten Näherungskommunikation anzeigen, einen Prozess ausführt, der die zweite Näherungskommunikation aktiviert.

9. Drahtlose Kommunikationsvorrichtung (1) nach einem der Ansprüche 1-8, wobei:
die externe Vorrichtung (100) einen drahtlosen Kommunikator (120) für externe Vorrichtungen aufweist, der durch die zweite Näherungskommunikation kommuniziert, wenn die zweite Näherungskommunikation aktiviert ist; und
die Steuerung (40), wenn die erste Näherungskommunikation mit der externen Vorrichtung durch den ersten drahtlosen Kommunikator (10) hergestellt wird, einen Prozess ausführt, der Informationen durch den ersten drahtlosen Kommunikator an die externe Vorrichtung sendet, um die Kommunikation durch den drahtlosen Kommunikator für externe Vorrichtungen zu aktivieren.

10. Steuerverfahren einer drahtlosen Kommunikationsvorrichtung (1), die konfiguriert ist, um mit einer externen Vorrichtung (100) drahtlos zu verbinden, und einen ersten drahtlosen Kommunikator (10), der konfiguriert ist, um durch eine erste Näherungskommunikation zu kommunizieren, und einen zweiten drahtlosen Kommunikator (20) umfasst, der konfiguriert ist, um durch eine zweite Näherungskommunikation mit einer kürzeren Kommunikationsreichweite als die erste Näherungskommunikation zu kommunizieren, umfassend:
Ausführen eines Prozesses, der die Kommunikation durch die zweite Näherungskommunikation aktiviert, wenn der erste drahtlose Kommunikator ein Bakensignal von der externen Vorrichtung empfängt,
**dadurch gekennzeichnet, dass**
der Prozess das Einschalten des zweiten drahtlosen Kommunikators in Reaktion darauf umfasst, dass der erste drahtlose Kommunikator ein Bakensignal von der externen Vorrichtung über die erste Näherungskommunikation in einem Zustand empfängt, in dem der zweite drahtlose Kommunikator ausgeschaltet ist.

11. Nichtflüchtiges, computerlesbares Aufzeichnungsmedium, auf dem ein Steuerprogramm einer drahtlosen Kommunikationsvorrichtung (10) gespeichert ist, die konfiguriert ist, um mit einer externen Vorrichtung (100) drahtlos zu kommunizieren, und einen ersten drahtlosen Kommunikator (10), der konfiguriert ist, um durch eine erste Näherungskommunikation zu kommunizieren, und einen zweiten drahtlosen Kommunikator (20) enthält, der konfiguriert ist, um durch eine zweite Näherungskommunikation mit einer kürzeren Kommunikationsreichweite als die erste Näherungskommunikation zu kommunizieren, wobei das Steuerungsprogramm einen Computer dazu veranlasst, die folgenden Funktionen zu verkörpern:
Ausführen eines Prozesses, der die Kommunikation durch die zweite Näherungskommunikation aktiviert, wenn der erste drahtlose Kommunikator ein Bakensignal von der externen Vorrichtung empfängt,
**dadurch gekennzeichnet, dass**
der Prozess das Einschalten des zweiten drahtlosen Kommunikators in Reaktion darauf umfasst, dass der erste drahtlose Kommunikator ein Bakensignal von der externen Vorrichtung über die erste Näherungskommunikation in einem Zustand empfängt, in dem der zweite drahtlose Kommunikator ausgeschaltet ist.

## Revendications

1. Dispositif de communication sans fil (1) configuré pour la connexion sans fil à un dispositif externe (100), comprenant :
un premier communicateur sans fil (10) configuré pour communiquer grâce à une première communication de proximité ;
un deuxième communicateur sans fil (20) configuré pour communiquer grâce à une deuxième communication de proximité ayant une portée de communication plus courte que la première communication de proximité ; et
un contrôleur (40) configuré pour exécuter un processus permettant une communication grâce à la deuxième communication de proximité lorsque le premier communicateur sans fil reçoit un signal de balise du dispositif externe, **caractérisé en ce que**
le contrôleur (40) est configuré pour allumer le deuxième communicateur sans fil (20) en réponse au premier communicateur sans fil (10) recevant un signal de balise du dispositif externe via la première communication de proximité dans un état où le deuxième communicateur sans fil (20) est éteint.

2. Dispositif de communication sans fil (1) décrit par la revendication 1, comprenant en outre :
un troisième communicateur sans fil (30) configuré pour communiquer grâce à une troisième communication sans fil ayant une portée de communication plus étendue que la deuxième communication de proximité ;
le contrôleur (40), lorsque la deuxième communication de proximité est permise, recevant de l'information de paramétrage pour la troisième communication sans fil de la part du dispositif externe (100) grâce au deuxième communicateur sans fil (20), et communiquant grâce à la troisième communication sans fil avec le dispositif externe sur la base de l'information de paramétrage reçue par le deuxième communicateur sans fil.

3. Dispositif de communication sans fil (1) décrit dans la revendication 2, dans lequel :
le troisième communicateur sans fil (30) gère une troisième communication sans fil lorsqu'une communication grâce à la troisième communication sans fil est permise ; et
le contrôleur (40), lorsqu'une proximité par rapport au dispositif externe (100) est détectée par la première communication de proximité, exécute un processus permettant une communication grâce à la troisième communication sans fil.

4. Dispositif de communication sans fil (1) décrit par l'une quelconque des revendications 1-3, comprenant en outre :
une mémoire (42) stockant un programme applicatif (APL) faisant en sorte qu'un ordinateur incarne une fonction exécutant un processus permettant une communication grâce à la deuxième communication de proximité et communiquant sans fil avec le dispositif externe (100) ;
dans lequel le contrôleur (40), lorsque le premier communicateur sans fil (10) reçoit le signal de balise du dispositif externe, exécute un programme permettant une communication grâce à la deuxième communication sans fil en lançant le programme applicatif.

5. Dispositif de communication sans fil (1) décrit par l'une quelconque des revendications 1-4, dans lequel :
le contrôleur (40), lorsque le premier communicateur sans fil (10) reçoit le signal de balise du dispositif externe (100), stocke le jeu de paramètres d'origine pour une deuxième communication de proximité et permet une communication grâce à la deuxième communication de proximité, et
lorsque le premier communicateur sans fil reçoit le signal de balise du dispositif externe, exécute un processus rétablissant la deuxième communication de proximité au paramétrage d'origine.

6. Dispositif de communication sans fil (1) décrit par l'une quelconque des revendications 1-5, dans lequel :
le contrôleur (40), lorsqu'un écran pour exécuter un processus nécessitant une deuxième communication de proximité avec le dispositif externe (100) est affiché et qu'une proximité par rapport au dispositif externe est détectée par une première communication de proximité, exécute un processus permettant une deuxième communication de proximité.

7. Dispositif de communication sans fil (1) décrit par l'une quelconque des revendications 1-6, dans lequel :
le contrôleur (40), lorsqu'une image qui a bénéficié d'une opération pour l'affichage est affichée et que le premier communicateur sans fil (10) reçoit le signal de balise du dispositif externe (100), exécute un processus permettant une deuxième communication de proximité.

8. Dispositif de communication sans fil (1) décrit par l'une quelconque des revendications 1-7, dans lequel :
le contrôleur (40), lorsque le premier communicateur sans fil (10) reçoit le signal de balise du dispositif externe (100) et que l'information reçue du dispositif externe par le premier communicateur sans fil est de l'information indiquant une compatibilité avec la deuxième communication de proximité, exécute un processus permettant une deuxième communication de proximité.

9. Dispositif de communication sans fil (1) décrit par l'une quelconque des revendications 1-8, dans lequel :
le dispositif externe (100) a un communicateur sans fil (120) pour des dispositifs externes qui communique grâce à la deuxième communication de proximité lorsque la deuxième communication de proximité est permise ; et
le contrôleur (40), lorsqu'une première communication de proximité avec le dispositif externe est établie par le premier communicateur sans fil (10), exécute un processus envoyant de l'information grâce au premier communicateur sans fil au dispositif externe pour permettre une communication grâce au communicateur sans fil pour des dispositifs externes.

10. Procédé de commande d'un dispositif de communication sans fil (1) configuré pour la connexion sans fil à un dispositif externe (100) et comprenant un premier communicateur sans fil (10) configuré pour communiquer grâce à une première communication de proximité, et un deuxième communicateur sans fil (20) configuré pour communiquer grâce à une deuxième communication de proximité ayant une portée de communication plus courte que la première communication de proximité, comprenant :
l'exécution d'un processus permettant une communication grâce à la deuxième communication de proximité lorsque le premier communicateur sans fil reçoit un signal de balise du dispositif externe,
**caractérisé en ce que**
le processus comprend la mise en marche du deuxième communicateur sans fil en réponse au premier communicateur sans fil recevant un signal de balise du dispositif externe via la première communication de proximité dans un état où le deuxième communicateur sans fil est éteint.

11. Support d'enregistrement lisible par ordinateur non transitoire stockant un programme de commande d'un dispositif de communication sans fil (10) configuré pour la connexion sans fil à un dispositif externe (100) et comprenant un premier communicateur sans fil (10) configuré pour communiquer grâce à une première communication de proximité, et un deuxième communicateur sans fil (20) configuré pour communiquer grâce à une deuxième communication de proximité ayant une portée de communication plus courte que la première communication de proximité, le programme de commande faisant en sorte qu'un ordinateur incarne une fonction de :
exécution d'un processus permettant une communication grâce à la deuxième communication de proximité lorsque le premier communicateur sans fil reçoit un signal de balise du dispositif externe,
**caractérisé en ce que**
le processus comprend la mise en marche du deuxième communicateur sans fil en réponse au premier communicateur sans fil recevant un signal de balise du dispositif externe via la première communication de proximité dans un état où le deuxième communicateur sans fil est éteint.
